# EUROPÄISCHE PATENTSCHRIFT

(11) **EP 1 801 738 B1**
(45) Veröffentlichungstag und Bekanntmachung des Hinweises auf die Patenterteilung: **04.03.2009**
(21) Anmeldenummer: 06026130.2
(22) Anmeldetag: 16.12.2006
(51) Int. Cl.: G06K 19/07, G06K 7/00

(54) **Transponder und Verfahren zum Betreiben eines Transponders**
Transponder and method to operate a transponder
Transpondeur et méthode pour faire fonctionner un transpondeur

(30) Priorität: 22.12.2005 DE 102005061438
(43) Veröffentlichungstag der Anmeldung: 27.06.2007
(73) Patentinhaber: ATMEL Germany GmbH, 74072 Heilbronn (DE)
(72) Erfinder: Tyulpanov, Alexander, Ru 445044 Togliatti (RU)
(74) Vertreter: Müller, Wolf-Christian

(56) Entgegenhaltungen:
- EP-A1- 0 694 887
- GB-A- 2 202 108
- GB-A- 2 321 745

## Beschreibung

Ein Transponder ist ein meist drahtloses Kommunikations-, Anzeige- oder Kontrollgerät, das eingehende Signale aufnimmt und automatisch darauf antwortet. Der Transponder empfängt Signale von einem externen Sender und sendet Signale an einen externen Empfänger. Der externe Sender und Empfänger können zu einer gemeinsamen Schreib-/Leseeinheit zusammengefasst sein.

Während des Empfangens und der Verarbeitung der empfangenen Signale, z.B. mit einem integrierten Schaltkreis des Transponders, und des Sendens der Signale an den externen Empfänger muss der Transponder mit dem Sender und dem Empfänger gekoppelt sein. Des Weiteren arbeitet der Transponder die eben genanten Schritte sequenziell ab.

Die GB 2 202 108 offenbart einen Transponder, der ein Signal mit einer Frequenz sendet, das zwischen dem n-fachen und (n+1) fachen der Frequenz des Empfangssignals liegt.

Die Aufgabe der vorliegenden Erfindung ist es, einen Transponder derart auszuführen, dass eine Voraussetzung für eine schnellere Kommunikation zwischen dem Transponder und der Schreib-/Leseeinheit möglich ist.

Eine Aufgabe der Erfindung ist es auch, ein Verfahren zum Betreiben eines Transponders anzugeben, das eine Voraussetzung für eine schnellere Kommunikation zwischen dem Transponder und der Schreib-/Leseeinheit ermöglicht.

Zumindest eine dieser Aufgaben wird erfindungsgemäß gelöst durch einen Transponder mit den Merkmalen des Patentanspruchs 1. Demgemäß ist ein Transponder mit einer Empfangsvorrichtung zum Empfangen eines von einem externen Sender stammenden ersten Signals mit einer ersten Trägerfrequenz und mit einer Sendevorrichtung zum Senden eines zweiten Signals mit einer zweiten Trägerfrequenz an einen externen Empfänger vorgesehen, wobei die zweite Trägerfrequenz größer als die erste Trägerfrequenz ist, die zweite Trägerfrequenz das (n+0,5)-Fache der ersten Trägerfrequenz beträgt und n eine natürliche Zahl größer als 1 ist und der Transponder eine Vorrichtung zum Herausfiltern eines ersten Trägersignals mit der ersten Trägerfrequenz aus dem ersten Signal und eine PLL-Schaltung, die aufgrund des ersten Trägersignals ein zweites Trägersignal mit der zweiten Trägerfrequenz für das zweite Signal erzeugt, aufweist.

Die von einem üblichen Transponder empfangenen Signale haben in der Regel eine niedrigere Frequenz als die vom Transponder gesendeten Signale. Das empfangene Signal hat harmonische Oberwellen, also Signalanteil mit einer Frequenz eines geradzahligen Vielfachen der Trägerfrequenz des empfangenen Signals. Bei einem gleichzeitigen Empfangen und Senden von Signalen ist es daher möglich, dass die vom Transponder gesendeten Signale durch die Oberwellen der empfangenen Signale gestört werden, wodurch eine zuverlässige Kommunikation zwischen dem Transponder und der Lese-/Schreibeinheit verhindert werden kann. Erfindungsgemäß sendet nun der erfindungsgemäße Transponder das zweite Signal mit einer Trägerfrequenz, die das (n+0,5)-Fache der zweiten Trägerfrequenz, also der Trägerfrequenz des empfangenen Signals, beträgt. Dadurch liegt die Frequenz des vom erfindungsgemäßen Transponder gesendeten Signals, also des zweiten Signals, genau zwischen zwei Oberwellen des vom Transponder empfangenen Signals. Dadurch ist es möglich, dass der erfindungsgemäße Transponder gleichzeitig Signale sendet und empfängt, da die Oberwellen des vom Transponder empfangenen Signals das vom Transponder gesendeten Signals wenn, dann relativ wenig, stört. Durch das gleichzeitige Senden und Empfangen von Signalen benötigt der erfindungsgemäße Transponder weniger Zeit für die Kommunikation mit der Schreib-/Leseeinheit. Dadurch erhöht sich die Bitrate.

Mit den beiden Signalen werden Informationen zwischen dem erfindungsgemäßen Transponder und dem externen Sender bzw. Empfänger ausgetauscht. Die beiden Signale sind beispielsweise modulierte Signale, also Signale die jeweils ein Trägersignal umfassen, auf das ein die Informationen enthaltendes weiteres Signal aufmoduliert ist. D.h., dem ersten Signal ist ein erstes Trägersignal und dem zweiten Signal ist ein zweites Trägersignal zugeordnet. Der erfindungsgemäße Transponder weist die PLL-Schaltung als eine Vorrichtung zum Generieren des zweiten Trägersignals mit der zweiten Trägerfrequenz für das zweite Signal auf.

Die PLL-Schaltung generiert das zweite Trägersignal aus dem ersten Trägersignal. Eine PLL-Schaltung ist ein phasengekoppelter Regelkreis. PLL ist die Abkürzung für den englischen Begriff "Phase-Locked-Loop". Vorteile einer Vorrichtung zum Generieren des zweiten Trägersignals aus dem ersten Trägersignal im Vergleich zum Quarzoszillator sind dessen potenzieller geringerer Energieverbrauch, geringerer Preis, geringeres Gewicht und die Möglichkeit, das zweite Trägersignal innerhalb einem integrierten Schaltkreis ohne externe Bauteile herzustellen.

Vorteilhafte Ausgestaltungen und Weiterbildungen der Erfindung ergeben sich aus den weiteren Unteransprüchen sowie aus der Beschreibung in Zusammenschau mit der Zeichnung.

Der erfindungsgemäße Transponder kann nämlich ein aktiver oder insbesondere ein passiver Transponder sein. Unter einem aktiven Transponder versteht man einen Transponder mit einer eigenen Energieversorgung, zum Beispiel in Form einer Batterie. Unter einem passiven Transponder versteht man Systeme, die die zur Kommunikation und zur Aufarbeitung interner Prozesse benötigte Energie ausschließlich aus dem Feld des externen Senders, beispielsweise der Schreib-/Leseeinheit, beziehen. Gemäß einer bevorzugten Ausführungsform des erfindungsgemäßen Transponders umfasst daher der erfindungsgemäße Transponder eine passive Energiequelle, beispielsweise einen Ladekondensator. Ein möglichst geringer Energieverbrauch des erfindungsgemäßen Transponders ist besonders bei der passivern Ausführung erstrebenswert.

Die Erfindung wird auch gelöst durch ein Verfahren zum Betreiben eines Transponders, aufweisend folgende Verfahrensschritte: Empfangen eines Empfangssignals mit einer ersten Trägerfrequenz mit einem Transponder, Extrahieren eines Eingangsträgersignals mit der ersten Trägerfrequenz aus dem Eingangssignal, Herstellen eines Sendeträgersignals mit einer zweiten Trägerfrequenz, die das (n + 0,5)-Fache der ersten Trägerfrequenz beträgt und n eine natürliche Zahl größer als 1 ist, unter Zuhilfenahme des Empfangsträgersignals und mittels einer PLL-Schaltung, Herstellen eines Sendesignals mit der zweiten Trägerfrequenz und Senden des Sendesignals mit dem Transponder.

Der erfindungsgemäße Transponder empfängt beispielsweise das erste Signal mit einer ersten Trägerfrequenz von 124,98 kHz, sodass z.B. aus diesem ersten Signal ein Trägersignal mit der Trägerfrequenz 124,98 kHz extrahiert wird. Aus diesem Trägersignal wird mit der PLL-Schaltung das zweite Trägersignal hergestellt. Das zweite Trägersignal hat bevorzugt eine Frequenz von 13,56 MHz, d.h. die 108,5-fache Frequenz des ersten Trägersignals. Gemäß einer weiteren bevorzugten Ausführungsform hat das erste Trägersignal eine erste Trägerfrequenz von 124,403 kHz und das zweite Signal eine Trägerfrequenz von 6,78 MHz, d.h. das 54,5-fache der Frequenz der ersten Trägerfrequenz.

Die Erfindung wird nachfolgend anhand der in den schematischen Figuren der Zeichnung angegebenen Ausführungsbeispiele näher erläutert. Es zeigen dabei:
- Fig. 1: ein Schaltbild eines Transponders und einer Sende-/Leseeinheit;
- Fig. 2: ein erstes Diagramm zur Veranschaulichung der Trägerfrequen- zen;
- Fig. 3: ein zweites Diagramm zur Veranschaulichung der Trägerfrequen- zen.

In den Figuren der Zeichnung sind gleiche und funktionsgleiche Elemente, Merkmale und Signale - sofern nichts Anderes angegeben ist - mit denselben Bezugszeichen versehen worden.

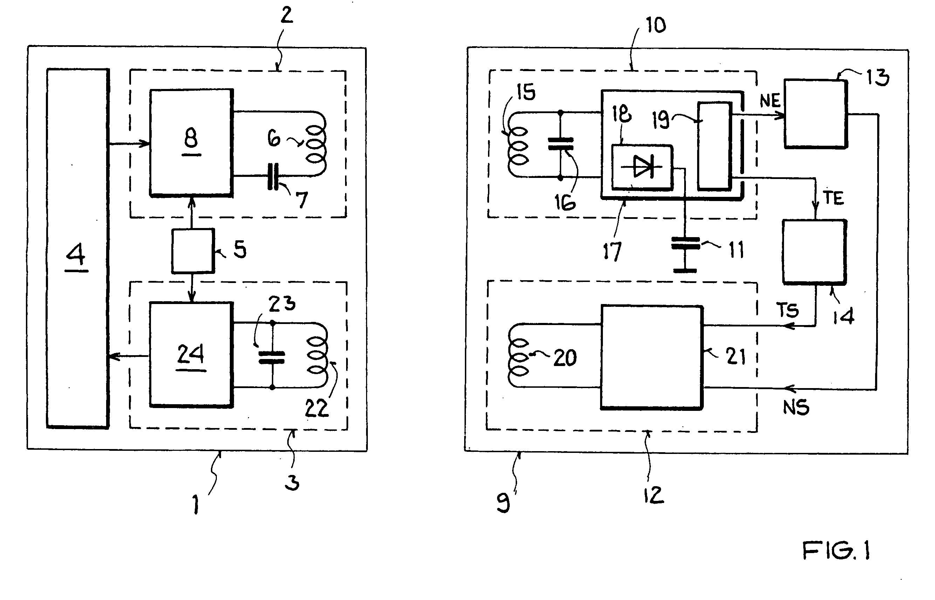

Die Fig. 1 zeigt eine Schreib-/Leseeinheit 1 mit einem Sender 2, einem Empfänger 3, einer Verarbeitungsvorrichtung 4, die den Sender 2 steuert und vom Empfänger 3 empfangene Daten verarbeitet, und einen Signalgenerator 5 . Der Sender 2 umfasst einen LC-Schwingkreis mit einer Spule 6 und einem Kondensator 7 und einen Modulator 8 mit entsprechender Treiberschaltung. Der Signalgenerator 7 stellt im Falle des vorliegenden Ausführungsbeispiels ein Trägersignal mit einer Trägerfrequenz von 124,98 kHz her, die dem Modulator 8 des Senders 2 zugeführt wird. Auf dieses Trägersignal wird ein von der Verarbeitungsvorrichtung 4 stammendes Nutzsignal, das für einen Transponder 9 bestimmte Informationen umfasst, aufmoduliert, wodurch ein Sendesignal mit der Trägerfrequenz 124,98 kHz entsteht. Dieses wird mit dem LC-Schwingkreis aus der Spule 6 und dem Kondensator 7, der auf die Sendefrequenz abgestimmt ist, an den Transponder 9 gesendet.

Der Transponder 9 ist im Falle des vorliegenden Ausführungsbeispiels ein passiver Transponder 9 und umfasst eine Empfangsvorrichtung 10, einen Ladekondensator 11 als passive Energiequelle, eine Sendevorrichtung 12, einen Mikrokontroller 13 zum Verarbeiten von von der Empfangsvorrichtung 10 erhaltener Daten und einen PLL-Schaltkreis 14. Der Ladekondensator 11 versorgt in nicht dargestellter Weise auch die Empfangsvorrichtung 10,den Mikrokontroller 13 und den PLL-Schaltkreis 14 mit elektrischer Energie.

Die Empfangsvorrichtung 10 weist einen LC-Schwingkreis mit einer Spule 15 und einem Kondensator 16 auf, der auf die Sendefrequenz des Senders 2 der Schreib-/Leseeinheit 1 abgestimmt ist. Die Empfangsvorrichtung 10 weist ferner eine dem LC-Schwingkreis nachgeschaltete Signalverarbeitungsvorrichtung 17 auf, die im Falle des vorliegenden Ausführungsbeispiels einerseits einen Gleichrichter 18 zum Aufladen des Ladekondensators 11 und andererseits einen Demodulator 19 umfasst.

Im Betrieb empfängt der Transponder 9 mit seiner Empfangsvorrichtung 10 ein von der Schreib-/Leseeinheit 1 gesendetes Signal und spaltet dieses mit dem Demodulator 19 in ein Empfangsträgersignal TE und in ein Nutzsignal NE auf, das die von der Schreib-/Leseeinheit 1 übermittelte Information enthält. Das Nutzsignal NE wird dem Mikrokontroller 13 zur Verarbeitung zugeführt. Das Empfangsträgersignal TE hat eine Frequenz gleich der Trägerfrequenz 124,98 kHz des von der Schreib-/Leseeinheit 1 gesendeten Signals.

Das Empfangsträgersignal TE wird der PLL-Schaltung 14 zugeführt. Eine PLL-Schaltung ist ein dem Fachmann allgemein bekannter phasengekoppelter Regelkreis. PLL ist die Abkürzung für den englischen Begriff "Phase-Locked-Loop". Eine PLL-Schaltung erzeugt aus einem Signal mit einer bestimmten ersten Frequenz ein Signal mit einer bestimmten zweiten Frequenz. Das Signal mit der ersten Frequenz ist im Falle des vorliegenden Ausführungsbeispiels das der PLL-Schaltung 14 zugeführte Empfangsträgersignal TE. Der PLL-Schaltkreis 14 ist im Falle des vorliegenden Ausführungsbeispiels derart abgestimmt, dass er ein Signal mit einer 108,5-fachen Frequenz im Vergleich zu seinem Eingangssignal erzeugt. Im Falle des vorliegenden Ausführungsbeispiels erzeugt also der PLL-Schaltkreis 14 aus dem Empfangsträgersignal TE ein Signal mit einer Frequenz von 13,56 MHz. Dieses Signal ist ein Sendeträgersignal TS, das für die Sendevorrichtung 12 des Transponders 9 bestimmt ist.

Die Sendevorrichtung 12 umfasst im Falle des vorliegenden Ausführungsbeispiels eine Spule 20 und einen Modulator 21 und sendet ein Signal an den Empfänger 3 der Schreib-/Leseeinheit 1. Dem Modulator 21 der Sendevorrichtung 12 des Transponders 9 wird das Sendeträgersignal TS und ein vom Mikrokontroller 13 stammendes Sendenutzsignal NS zugeführt. Der Modulator 21 stellt eine Sendesignal her, indem er das Sendenutzsignal NS auf das Sendeträgersignal TS moduliert. Die Spule 20 sendet das Sendesignal an die Schreib-/Leseeinheit 1.

Die Schreib-/Leseeinheit 1 empfängt das vom Transponder 9 stammende Sendesignal mit ihrem Empfänger 3, der einen LC-Schwingkreis mit einer Spule 22 und einem Kondensator 23 und einen Demodulator 24 aufweist. Dieser LC-Schwingkreis ist auf die Sendeträgerfrequenz des Tranponders 9 abgestimmt. Der Demodulator 24 demoduliert das empfangene Signal, extrahiert die vom Transponder 9 gesendete Information und leitet diese an die Verarbeitungsvorrichtung 4 weiter. Des Weiteren wird der Demodulator 24 vom Signalgenerator 5 getaktet.

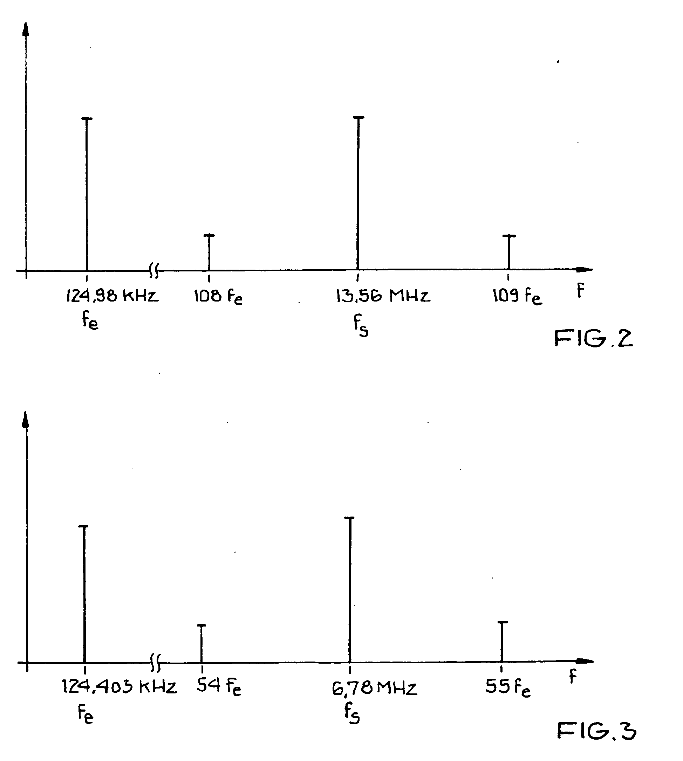

Die Fig. 2 zeigt teilweise das Spektrum des vom Transponder 9 empfangenen Signals. Neben einem Hauptwert bei der Trägerfrequenz fe des empfangenen Signals bei fe=124,98 kHz umfasst das empfangene Signal auch Oberwellen, also Signalanteile mit einem geradzahligen Vielfachen der Trägerfrequenz. Die Fig. 2 zeigt exemplarisch die Signalanteile der 108. und 109. Oberwelle, also Signalanteile mit einer Frequenz von 108*fe bzw. 109*fe. Der Transponder 9 sendet jedoch im Falle des vorliegenden Ausführungsbeispiels Signale mit einer Frequenz fs von 108,5*fe, also mit einer Frequenz, die genau zwischen zwei Oberwellen des empfangenen Signals liegt und 13,56 MHz beträgt. Dadurch stören die Oberwellenanteile des empfangenen Signals das gesendete Signal wenn, dann nur unwesentlich, sodass der Transponder 9 insbesondere dafür vorgesehen ist, gleichzeitig Signale zu empfangen und zu senden.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar. So sind die genannten Trägerfrequenzen nur beispielhaft. So zeigt die Fig. 3 teilweise das Spektrum von dem Transponder 9 gesendeter bzw. empfangener Signale mit anderen Trägerfrequenzen. Im Falle des in der Fig. 3 gezeigten Ausführungsbeispiels empfängt der Transponder 9 Signale mit einer Trägerfrequenz von fe=124,403 kHz. Die PLL-Schaltung 14 ist dann derart ausgeführt, dass sie ein Trägersignal mit einer Frequenz von fs=6,78MHz, entsprechend einem 54,5-Fachen der Frequenz fe des empfangenen Signals, herstellt.

### Bezugszeichenliste

- 1: Schreib-/Leseeinheit
- 2: Sender
- 3: Empfänger
- 4: Verarbeitungsvorrichtung
- 5: Signalgenerator
- 6: Spule
- 7: Kondensator
- 8: Modulator
- 9: Transponder
- 10: Empfangsvorrichtung
- 11: Ladekondensator
- 12: Sendevorrichtung
- 13: Mikrokontroller
- 14: PLL-Schaltkreis
- 15: Spule
- 16: Kondensator
- 17: Signalverarbeitungsvorrichtung
- 18: Gleichrichter
- 19: Demodulator
- 20: Spule
- 21: Modulator
- 22: Spule
- 23: Kondensator
- 24: Demodulator
- fe: Trägerfrequenz
- fs: Trägerfrequenz
- TS: Sendeträgersignal
- NE: Nutzsignal
- TE: Empfangsträgersignal
- NS: Sendenutzssignal

## Patentansprüche

1. Transponder mit einer Empfangsvorrichtung (10) zum Empfangen eines von einem externen Sender (2) stammenden ersten Signals mit einer ersten Trägerfrequenz (fe) und mit einer Sendevorrichtung (12) zum Senden eines zweiten Signals mit einer zweiten Trägerfrequenz (fs) an einen externen Empfänger (3), wobei die zweite Trägerfrequenz (fs) größer als die erste Trägerfrequenz ist, wobei die zweite Trägerfrequenz (fs) das (n+0,5)-Fache der ersten Trägerfrequenz (fe) beträgt und n eine natürliche Zahl größer als 1 ist,
**gekennzeichnet durch**
eine Vorrichtung (19) zum Herausfiltern eines ersten Trägersignals (TE) mit der ersten Trägerfrequenz (fe) aus dem ersten Signal und eine PLL-Schaltung (14), die aufgrund des ersten Trägersignals (TE) ein zweites Trägersignal (TS) mit der zweiten Trägerfrequenz (fs) für das zweite Signal erzeugt.

2. Transponder nach Anspruch 1,
**dadurch gekennzeichnet,**
**dass** der Transponder eine passive Energiequelle (11) aufweist.

3. Transponder nach Anspruch 1 oder 2,
**dadurch gekennzeichnet,**
**dass** die Sendevorrichtung (12) das zweite Signal sendet während die Empfangsvorrichtung (10) das erste Signal empfängt.

4. Verfahren zum Betreiben eines Transponders (9), insbesondere eines Transponders nach einem der vorstehenden Ansprüche, mit den folgenden Verfahrensschritten:
- Empfangen eines Einganssignals mit einer ersten Trägerfrequenz (fe) mit einem Transponder (9),
- Extrahieren eines Eingangsträgersignals mit der ersten Trägerfrequenz (fe) aus dem Eingangssignal,
- Herstellen eines Sendeträgersignals (TS) mit einer zweiten Trägerfrequenz (fs), die das (n+0,5)-Fache der ersten Trägerfrequenz (fe) beträgt und n eine natürliche Zahl größer als 1 ist, unter Zuhilfenahme des Empfangsträgersignals (TE) und mittels einer PLL-Schaltung (14),
- Herstellen eines Sendesignals mit der zweiten Trägerfrequenz (fs) und
- Senden des Sendesignals mit dem Transponder (9).

5. Verfahren nach Anspruch 4,
**dadurch gekennzeichnet,**
**dass** der Transponder (9) das Sendesignal sendet während er das Empfangssignal empfängt.

6. Verfahren nach Anspruch 4 oder 5,
**dadurch gekennzeichnet,**
**dass** das Senden des Sendesignals mit einer zweiten Trägerfrequenz (fs) von 6,78MHz, 8,1MHz, oder 13,56 MHz erfolgt.

## Claims

1. Transponder with a receiving device (10) for receiving a first signal, which originates from an external transmitter (2), with a first carrier frequency (fe) and with a transmitting device (12) for transmitting a second signal with a second carrier frequency (fs) to an external receiver (3), wherein the second carrier frequency (fs) is greater than the first carrier frequency, wherein the second carrier frequency (fs) is (n + 0.5) times the first carrier frequency (fe) and n is a natural number greater than 1, **characterised by** a device (19) for filtering a first carrier signal (TE) with the first carrier frequency (fe) out of the first signal and a phase-locked-loop circuit (14) which by way of the first carrier signal (TE) generates a second carrier signal (TS) with the second carrier frequency (fs) for the second signal.

2. Transponder according to claim 1, **characterised in that** the transponder has a passive energy source (11).

3. Transponder according to claim 1 or 2, **characterised in that** the transmitting device (12) transmits the second signal while the receiving device (10) receives the first signal.

4. Method of operating a transponder (9), particularly a transponder according to any one of the preceding claims, comprising the following method steps:
- receiving an input signal with a first carrier frequency (fe) by a transponder (9),
- extracting an input carrier signal with the first carrier frequency (fe) from the input signal,
- producing a transmission carrier signal (TS) with a second carrier frequency (fs), which is (n + 0.5) times the first carrier frequency (fe) and n is a natural number greater than 1, with the assistance of the received carrier signal (TE) and by means of a phase-locked-loop circuit (14),
- producing a transmission signal with the second carrier frequency (fs) and
- transmitting the transmission signal by the transponder (9).

5. Method according to claim 4, **characterised in that** the transponder (9) transmits the transmission signal while it receives the received signal.

6. Method according to claim 4 or 5, **characterised in that** the transmission of the transmission signal is carried out with a second carrier frequency (fs) of 6.78 MHz, 8.1 MHz or 13.56 MHz.

## Revendications

1. Transpondeur comprenant un dispositif récepteur (10) pour la réception d'un premier signal provenant d'un émetteur externe (2) sur une première fréquence porteuse (fe), et un dispositif émetteur (12) pour l'émission d'un deuxième signal sur une deuxième fréquence porteuse (fs) à un récepteur externe (3), la deuxième fréquence porteuse (fs) étant supérieure à la première fréquence porteuse, la deuxième fréquence porteuse (fs) correspondant à (n+0,5) fois la première fréquence porteuse (fe), n étant un entier naturel supérieur à 1, **caractérisé par** un dispositif (19) de filtrage d'un premier signal porteur (TE) sur la première fréquence porteuse (fe) à partir du premier signal et un circuit asservi en phase (14) qui génère sur la base du premier signal porteur (TE) un deuxième signal porteur (TS) sur la deuxième fréquence porteuse (fs) pour le deuxième signal.

2. Transpondeur selon la revendication 1, **caractérisé en ce que** le transpondeur présente une source d'énergie passive (11).

3. Transpondeur selon la revendication 1 ou 2, **caractérisé en ce que** le dispositif émetteur (12) émet le deuxième signal pendant que le dispositif récepteur (10) reçoit le premier signal.

4. Procédé de commande d'un transpondeur (9), plus particulièrement d'un transpondeur selon l'une quelconque des revendications précédentes, comprenant les étapes suivantes :
• réception d'un signal d'entrée sur une première fréquence porteuse (fe) par l'intermédiaire d'un transpondeur (9),
• extraction d'un signal porteur d'entrée sur la première fréquence porteuse (fe) à partir du signal d'entrée,
• fourniture d'un signal porteur d'émission (TS) sur une deuxième fréquence porteuse (fs), correspondant à (n+0,5) fois la première fréquence porteuse (fe), n étant un entier naturel supérieur à 1, en se servant du signal porteur récepteur (TE) et à l'aide d'un circuit asservi en phase (14),
• fourniture d'un signal d'émission sur la deuxième fréquence porteuse (fs), et
• émission du signal émetteur à l'aide du transpondeur (9).

5. Procédé selon la revendication 4, **caractérisé en ce que** le transpondeur (9) émet le signal émetteur pendant qu'il reçoit le signal récepteur.

6. Procédé selon l'une quelconque des revendications 4 ou 5, **caractérisé en ce que** l'émission du signal émetteur s'effectue sur une deuxième fréquence porteuse (fs) de 6,78 MHz, 8,1 MHz ou 13,56 MHz.
